# EUROPEAN PATENT APPLICATION

(11) **EP 2 141 222 A1**
(43) Date of publication of application: **06.01.2010**
(21) Application number: 08159365.9
(22) Date of filing: 30.06.2008
(51) Int. Cl.: C12C 11/07, C12H 1/06

(54) **An improved method of brewing beer**

(71) Applicant: InBev S.A., 1000 Bruxelles (BE)
(72) Inventor: Adam, Pierre, 1457 Walhain (BE); Boerescu, Alina, London, Ontario N6J3L2 (CA)
(74) Representative: Gevers, François

(57) **Abstract**

The invention is related to a method of brewing beer comprising the steps of
- fermenting wort in a batch fermenter (b), and
- centrifuging the fermented wort,
characterized in that said centrifuging step (c') is done by means of a disc stack centrifuge.

## Description

### Field of the Invention:

The present invention relates to a process for brewing beer. More in particular, the present invention relates to the process of maturation for fermented wort.

### Background of the Invention:

In a conventional beer brewing process, wort is produced and fermented in a fermentation vessel by adding yeast to the wort. After the fermentation is completed, the fermented wort, or so-called "green beer", is pumped into a maturation tank for maturation or cold aging. In some process configurations, the fermentation tank may also be used for subsequent maturation.

Maturation is an important step in the brewing process whereby large amounts of post-fermentation yeast, particles and other materials present in fermented wort are removed. Said compounds are not desired in the finished product, since these compounds cause haziness to the final beer product. Furthermore, fermented wort also contains proteins and polyphenols, which may precipitate after bottling resulting in a reduction of colloidal stability of the final beer product.

During conventional maturation, fermented wort is typically cooled in the range of -2 to 5°C for a number of days. By gravimetric sedimentation, the vast majority of the post-fermentation yeast and particles can settle out and collect in a compacted layer on the bottom of the maturation tank. Also proteins and to a lower extend polyphenols may precipitate at these temperatures. After maturation the resulting beer is filtered.

Conventional maturation suffers from severe drawbacks. A first very important drawback is that, besides fermentation, conventional maturation is a buffer stage usually taking several days in the production of beer in between process steps such as wort production taking only a few hours, and more continuous process steps such as filtration and packaging.

Secondly, conventional maturation requires huge investment in operational and equipment costs such as high volume maturation tanks.

Thirdly, from a logistic point of view, a storage step results in operational complexity and reduces operational flexibility, especially for multi-brand brewers.

A further drawback of current maturation processes is the accumulation of sludge in the maturation tank bottom which, in turn, is self-insulating and may warm up, thereby causing the yeast to undergo autolysis and generate off-flavors. In addition, the disposed sludge still contains beer as a major component resulting in loss of efficiency since recovery of the beer brings along extra costs and increased process complexity. In case horizontal tanks are used, the sludge has to be removed manually, causing considerable down time and increased operational costs. Further, the tanks (vertical and horizontal) have to be cleaned accurately between two batches, which represents an additional operational cost.

Another drawback of current maturation processes is that the maturation tanks have to be maintained cooled such that the fermented wort keeps a temperature between -2°C and 5°C. Cooling high volumes takes high amounts of energy and represents high operational costs.

Though conventional maturation has clearly severe drawbacks, it is still the brewer's preferred method to remove undesired substances from green beer. Indeed, WO 2007/136254 states that neither separators nor filters alone are capable of efficiently removing the un-dissolved components that are present in low-yeast fermentate. This prior art document describes a method wherein firstly removal of the yeast cells by sedimentation is proposed, followed by treatment with a separator, such as a centrifuge, to remove other undissolved components. The sedimentation, as described herein, takes several days of cold storage.

An example of an attempt to alleviate the above mentioned problems is also described in WO 97/43400, wherein the traditional step of storing the fermented wort in a maturation tank for a period in the order of days, is replaced by treating the fermented wort with an agent which reacts with haze precursor substances present in the fermented wort to precipitate them out. After the agent is added, a centrifugal process may be used to remove at least a substantial part of the precipitated material. This method requires an agent-introducing and dosing system, and dedicated agents.

Given the drawbacks of existing methods, it is a first object of the present invention to provide a method for brewing beer wherein the maturation time may be reduced considerably, or even reduced to approximately zero.

A second object of the present invention is to provide an economically and efficiently optimized method for brewing beer.

Another object of the present invention is to provide a method which renders the brewing process operationally friendly and allows for improved forecasting for multi brand brewers.

A further object of the present invention is to provide a method which may optimize the yield of beer at economically manageable cost and process complexity.

In accordance with the present invention, the above objectives are met by a process for brewing beer whereby maturation time is reduced by means of centrifuging the fermented wort via a disc stack centrifuge.

### Summary of the Invention:

The invention is directed to a method of brewing beer comprising the steps of
- fermenting wort in a batch fermenter, and
- centrifuging the fermented wort,
   **characterized in that** said centrifuging step is done by
means of a discstack centrifuge.

### Brief description of the drawings:

FIG 1 illustrates a conventional brewing process.
FIG 2 illustrates an embodiment of the present invention.
FIG 3 illustrates another embodiment of the present invention.
FIG 4 illustrates a preferred embodiment of the present invention.
FIG 5 illustrates the maturation process of fermented wort.
FIG 6 illustrates a further preferred embodiment of the present invention.

### Description of the Invention:

A person skilled in the art will understood that the embodiments described below are merely illustrative in accordance with the present invention and not limiting the intended scope of the invention. Other embodiments may also be considered.

As a first embodiment in accordance with the present invention, a method of brewing beer is provided comprising the steps of
- fermenting wort in a batch fermenter, and
- centrifuging the fermented wort,
   **characterized in that** said centrifuging step is done by means of a disc stack centrifuge. By centrifuging the fermented wort with at least one disc stack centrifuge, the maturation step, which is normally used in conventional brewing processes after fermentation, may be considerably reduced even up to zero maturation time.

As a consequence, it may not be required anymore to invest in maturation tanks because a disc stack centrifuge allows continuously centrifuging, whereby the fermented wort may be transported continuously from the fermentation tank to the disc stack centrifuge and further to filtration and packaging.

Furthermore, by centrifuging the fermented wort instead of maturating it, the maturation time does not have to be taken in account. This results in a more continuous brewing process, which is less operationally complex than a brewing process wherein a maturation taking several days occurs between process steps such as wort production taking only a few hours, and more continuous process steps such as filtration and packaging. Hence, operational flexibility is improved, in particular for multi-brand breweries.

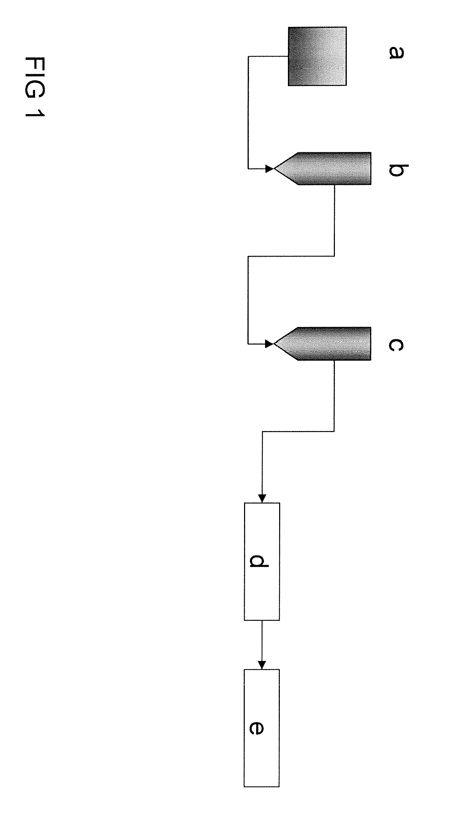

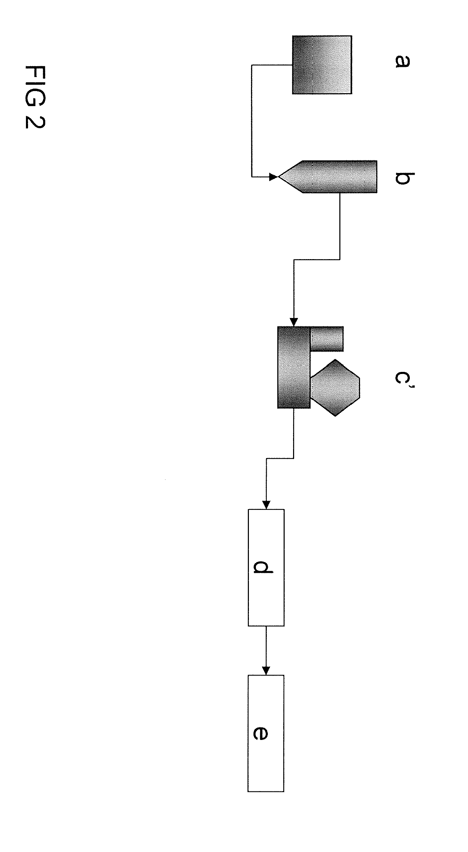

A conventional batch brewing process is schematically illustrated in FIG 1, while a batch brewing process in accordance with the present invention is schematically illustrated in FIG 2. After fermentable wort production (a), batch fermentation (b) occurs. At the end of fermentation, in the conventional process the fermented wort is transported to maturation tanks (c) or maturation occurs in the fermentation tanks (not shown), while in a process according to the invention fermented wort is transported to a disc stack centrifuge (c'). After centrifuging, the centrifuged beer is filtered (d) and packed (e).

In essence, a disc stack centrifuge is a clarifier whose base is wrapped around a central line. Rotating this unit rapidly means that the effect of gravity is replaced by a controllable centrifugal force, having an effect on solids suspended in liquids that may be more than 10 000 times greater than gravity. When subjected to such forces, the denser solid particles are pressed outwards against the rotating bowl wall, while the less dense liquid phases form concentric inner layers. By inserting special plates - the disc stack - additional surface settling area is provided, resulting in strongly speeding up the separation process. The concentrated solids phase, which is collected in the so-called sludge holding space, can be removed continuously, intermittently or manually depending on the design and application of the disc stack centrifuge.

Examples of disc stack centrifuges are described on websites and in brochures of Westfalia Separator and Alfa Laval.

Centrifuges can be compared by a theoretical capacity factor called Sigma factor (Σ). In case of disc stack centrifuges this Σ-factor is dependent on the number of discs, the gravitational acceleration, angular speed, the angle of the discs with respect to the vertical pipe, the inner radius of the discs package and the outer radius of the discs package. Further, according to "Industrial Centrifugation Technology" (Wallace Woon-Fong Leung, McGraw-Hill, 1998), in general the Σ-factor is proportional to the flow rate through the centrifuge and reverse proportional to the sedimentation speed in standard conditions. Knowing the sedimentation speed being proportional to the average particle size, efficiently centrifuging fermented wort wherein the solids have a small average particle size requires either a proportionally low flow rate, either a proportionally high Σ-factor. In the context of the present invention, the ratio of the Σ-factor and the flow rate may be at least 400 m²hr/hl, preferably at least 700 m²hr/hl, or more preferably at least 1000 m²hr/hl. For example, in accordance the centrifuging step may be done at an Σ-factor of at least 200.000m², preferably at least 350.000m², or more preferably at least 500.000m² for a flow rate of 500hl/hr. Further in accordance, the centrifuging step may be done at a flow rate up to 500hl/hr, preferably up to 285 hl/hr, or more preferably up to 200hl/hr for a Σ-factor of 200.000m².

In a further embodiment according to the present invention, a method of brewing beer is provided wherein European Brewery Standard (EBC) turbidity of the centrifuged fermented wort is less than 125, less than 100, or preferably less than 75. Mainly yeast, and in some extend fine trub particles remaining from the wort production, are responsible for EBC turbidity in fermented wort. Therefore the centrifuging step is mainly focused on yeast removal and on fine trub particle removal (in relation to high sigma) to reach less than 75 EBC. As already mentioned, the removal efficiency of yeast and fine trub particles is dependent on the Σ-factor and the flow rate.

In an embodiment in accordance with the present invention, a method of brewing beer is provided wherein during the centrifuging step solids present in the fermented wort with an average particle size of less than 10 micrometer, less than 5 micrometer, or preferably less than 2 micrometer may be removed for a percentage of at least 85 percent, or a at least 90 percent, and preferably more than 95 percent. Yeast particles with an average particle size between 6 and 10 micrometer may be removed for at least 95 percent, or even at least 99 percent. Fine trub particles with an average particle size less than 6 micrometer may be removed for at least 85 percent, or at least 90 percent, or even at least 95%. As already mentioned, the removal efficiency of particles with a certain average particle size is dependent on the Σ-factor and the flow rate. A disc stack centrifuge allows separation of solids with particle size between 0.1 and 100 micrometer depending on its Σ-factor and flow rate, while for example a decanter centrifuge typically allows separation of solids with a size of 10 micrometer and higher.

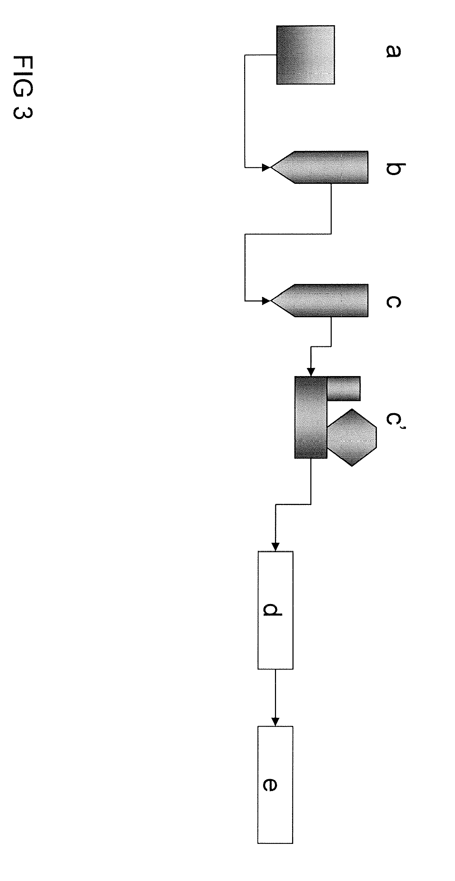

In another embodiment in accordance with the present invention and as illustrated in FIG 3, a method of brewing beer is provided wherein between the step of fermenting and the step of centrifuging optionally a maturation step (c) is performed. During such optional maturation step fermented wort may be cooled in the range of -2 to 5°C for a number of days, resulting in at least partial sedimentation of solids and at least partial precipitation of other haze precursor substances, the latter also possibly removed during centrifuging depending on their particle size. Preferably, the maturation time may take less than 3 days, less than 1 day, preferably less than 12 hours, or more preferably less than 6 hours, depending on the capacity of the at least one disc stack centrifuge.

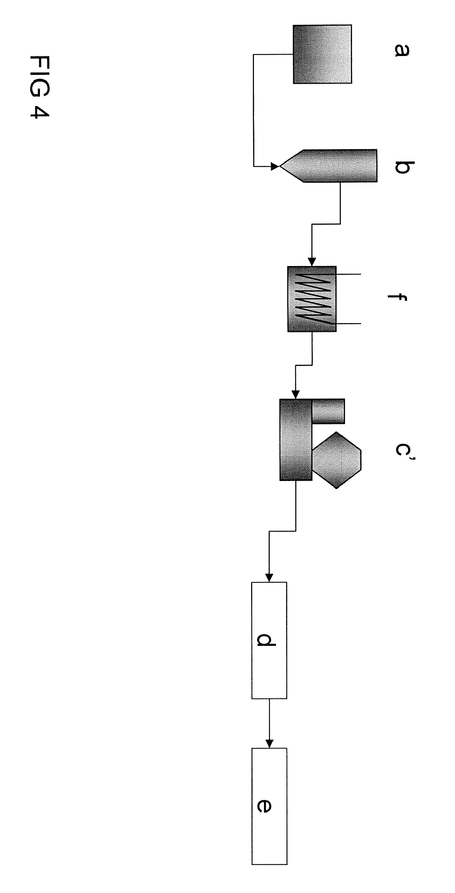

In a preferred embodiment in accordance with the present invention, a method of brewing beer is provided wherein the centrifuging step is done substantially immediately after fermentation. As illustrated in FIG 4, after fermentation the fermented wort may be transported continuously and directly to the inlet of the at least one disc stack centrifuge, optionally flowing during transport through a heat exchanger circuit for cooling the fermented wort (f).

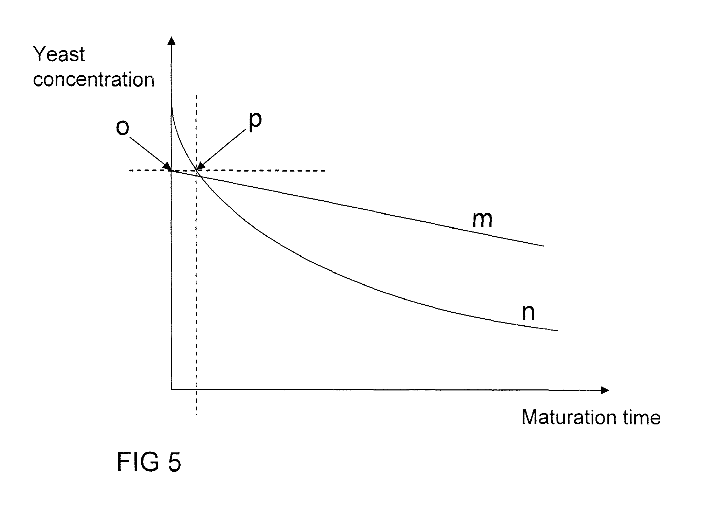

Adding a maturation step and the length of the maturation time may depend on the type of yeast used during fermentation. As known by a skilled person, mainly two types of yeast are used, namely flocculent yeast and powder yeast. Flocculent yeast sediments to a smaller or a larger extend depending on used species, while powder yeast sediments very difficult. This is illustrated in FIG 5, where curve (m) shows a typical relation between powder yeast concentration in fermented wort versus maturation time, and where curve (n) shows a typical relation between flocculent yeast concentration in fermented wort versus maturation time. In conventional maturation of wort fermented by powder yeast, maturation may take up to 7 days. In order to decrease the maturation time, brewers often use coagulating agents. However, when using a disc stack centrifuge with a sufficient Σ-factor and sufficient sludge holding space, centrifuging may be started immediately after fermentation (o). In case of wort which is fermented by flocculent yeast, centrifuging may be started after a maturation time of a few hours (p), e.g. less than 6 hours or even less than 4 hours, such that the yeast concentration peak in the fermented wort at maturation start is decreased slightly in order to have less yeast load in the centrifuge. This short maturation time may not be necessarily done at conventional maturation temperatures between -2°C and 3°C, but also at higher temperatures (e.g. between 8°C and 12°C). However, it is understood by a person skilled in the art, that addition of a maturation step and length of maturation time is always dependent on yeast types, yeast concentration in the fermented wort, and Σ-factor and sludge holding space of the disc stack centrifuge.

In conventional brewing methods, during maturation often precipitating agents such as coagulating agents, or fining agents are used to improve sedimentation of yeast and precipitation of other haze precursor substances. However, when using a suitable disc stack centrifuge, the use of these agents may be minimized or even stopped. Therefore, in a preferred embodiment in accordance with the present invention, a method of brewing beer is provided wherein in said maturation step no agents reacting with haze precursor substances present in said fermented wort are used.

In a further embodiment in accordance with the present invention, a method of brewing beer is provided wherein in the centrifuging step a series of and/or parallel disc stack centrifuges are used. As described above, the centrifuging step may be done at an Σ-factor of at least 200.000m², preferably at least 350.000m², or more preferably at least 500.000m² for a flow rate of 500hl/hr. This capacity may be obtained by using more than one disc stack centrifuge which may be arranged in series or in parallel or a combination of both.

In a particular embodiment, a configuration of one single disc stack centrifuge with sufficiently high Σ-factor and sludge holding space to centrifuge the fermented wort while reaching the required EBC turbidity may be replaced by a configuration of two or more parallel disc stack centrifuges with lower Σ-factor and lower sludge holding space, since in a parallel configuration the flow rate through each centrifuge is decreased proportionally compared to the flow rate in a single centrifuge configuration.

In another particular embodiment, a configuration of one single disc stack centrifuge with sufficiently high Σ-factor and sludge holding space to centrifuge the fermented wort while reaching the required EBC turbidity may be replaced by a configuration of at least two disc stack centrifuges in series. The flow rate through the first centrifuge is as high as in case of a single centrifuge and high amounts of solids with relatively high average particle size are removed at this stage. The flow rate through the second centrifuge is of course the same as the flow rate through the first, but at this stage remaining solids with relatively low average particle size are removed. Therefore, for the first disc stack centrifuge, a lower Σ-factor is sufficient, but indeed a high sludge holding space is required, while for the second centrifuge a high Σ-factor is required and a lower sludge holding space is sufficient.

In an additional embodiment in accordance with the present invention, a method of brewing beer is provided further comprising a polishing centrifuging step. After the centrifuging step, an additional centrifuging step removing at least part of remaining yeast and other haze precursor substances may be performed. Such additional centrifuging step, or so-called polishing centrifuging step, is done by means of a polishing centrifuge, preferably a disc stack centrifuge. A polishing centrifuging step may be useful to improve the EBC turbidity of the centrifuged fermented wort. A configuration of a first disc stack centrifuge in series with a second polishing disc stack centrifuge may have the following characteristics: the first disc stack centrifuge may have a lower Σ-factor than the polishing disc stack centrifuge, but indeed a higher sludge holding space may be required, while the second polishing centrifuge may have a higher Σ-factor and a lower sludge holding space than the first centrifuge.

In an embodiment in accordance with the present invention, the filtration step (d) performance may be not affected compared to a conventional brewing process, and even may increase. Filtration may be done by means of kieselguhr, or a regenerable filter aid, or cross flow membrane filtration. By centrifuging the fermented wort, the filtration step performance may increase compared to a comparable conventional brewing process, since in case of kieselguhr filtration the kieselguhr consumption may decrease and the flow rate may increase. The pressure increase at the kieselguhr filter may be kept below 0.3 bar/hr. The haze after filtration may be within spec and the EBC turbidity may be below 0.7. Also other physico-chemical characteristics of the beer (taste, pH, color, etc.) may not be affected.

### Example:

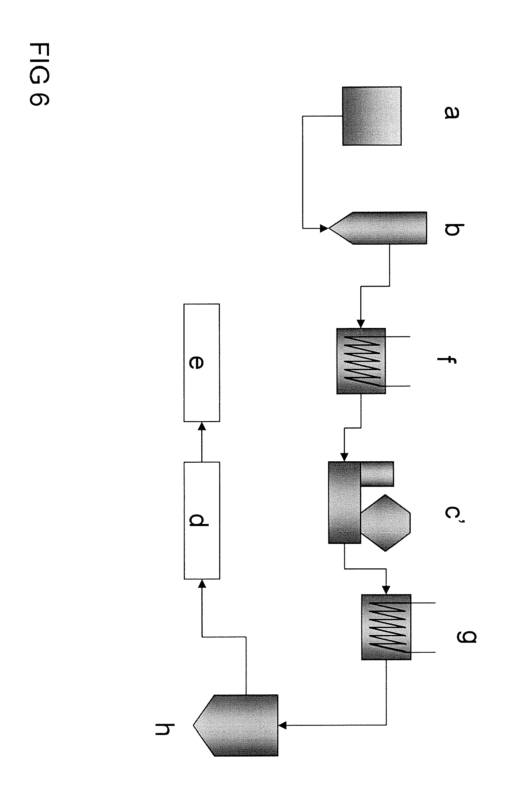

An example of a brewing process in accordance with the present invention is described below and illustrated in FIG 6.

After fermentable wort production (a), the fermentable wort is transported to the fermentation tanks (b). Powder yeast is added and fermentation starts.

The fermentation is monitored by two parameters, namely the percentage sugar reduction in the wort and the diacetyl value. When the percentage sugar is reduced to a typical value (depending of malt and yeast) of 20-25 percent remaining sugar and the diacetyl value is below a typical value of 50 ppb, the fermented wort (or green beer) is cooled to 10°C and maturated for 4 hours in the fermentation tanks.

Next, it is pumped through a cooling unit (f) to cool the beer to a temperature of -1 °C and pumped further to the inlet of the disc stack centrifuge (c'). This disc stack has a Σ-factor of 200 000m² at a flow rate of 200 up to 450 hl/hr and a sludge holding space of 22 liter.

Starting the centrifuging step, the green beer has a yeast count up to 40 000 000 lev/ml, a solids content up to 1,2% and EBC turbidity up to 1000.

Since sedimentation of yeast and fine trub particles in the fermentation tanks proceeds during centrifuging, resulting in decreasing yeast load (see also FIG 5), flow rate is increased from about 200 hl/hr at the beginning of the centrifuging step to 450 hl/hr.

After centrifuging, the beer has a yeast count below 125 000 lev/ml, a solids content below measurement limit (limit is 0.01 %) and EBC turbidity below 50.

Next, again the beer is cooled by a cooling unit (g) before buffering it in a buffer tank (h) and pumped through a kieselguhr filter (d).

By centrifuging the fermented wort, the filtration step performance increases compared to a comparable conventional brewing process, since the kieselguhr consumption decreases from 120 g/hl in a comparable conventional brewing process to 95 g/hl and the flow rate increases from 4700 hl/h to 6000 hl/hr. The pressure increase at the kieselguhr filter is below 0.3 bar/hr. The haze after filtration is within spec and the EBC turbidity is below 0.7. Also other physico-chemical characteristics of the beer (taste, pH, color, etc.) are not affected.

From filtration, the beer is pumped to a brightbeer tank (not shown) which functions as a buffer between beer production and packaging where the beer is packed in barrels, bottles, etc. (e) and is ready for consumption.

## Claims

1. A method of brewing beer comprising the steps of
- fermenting wort in a batch fermenter, and
- centrifuging the fermented wort,
**characterized in that** said centrifuging step is done by means of a disc stack centrifuge.

2. A method according to claim 1 wherein the ratio of the Σ-factor and the flow rate of the centrifuging step is at least 400 m²hr/hl.

3. A method according to claim 2 wherein the ratio of the Σ-factor and the flow rate of the centrifuging step is at least 700 m²hr/hl.

4. A method according to claim 3 wherein the ratio of the Σ-factor and the flow rate of the centrifuging step is at least 1000 m²hr/hl.

5. A method according to claim 4 wherein the Σ-factor of the centrifuging step is at least 500 000m² for a respective flow rate of at least 500hl/hr.

6. A method according to claims 1-5, wherein during the centrifuging step solids present in the fermented wort with an average particle size of less than 5 micrometer are removed for at least 90 percent,

7. A method according to claims 6, wherein during the centrifuging step solids present in the fermented wort with an average particle size of less than 2 micrometer are removed for at least 90 percent,

8. A method according to claims 1-7, wherein EBC turbidity of the centrifuged fermented wort is less than 100, or preferably less than 75.

9. A method according to claims 1-8, having a further maturation step between the step of fermenting and the step of centrifuging.

10. A method according to claim 9, wherein he maturation time is less than 12 hours.

11. A method according to claim 10, wherein the maturation time is less than 6 hours.

12. A method according to claim 11, wherein the centrifuging step is done substantially immediately after fermentation.

13. A method according to claims 9-12, wherein in said maturation step no agents reacting with haze precursor substances present in said fermented wort are used.

14. A method according to any of the above claims wherein in the centrifuging step a series of and/or parallel disc stack centrifuges are used.

15. A method according to any of the above claims, further comprising a polishing centrifuging step.
